# EUROPEAN PATENT APPLICATION

(11) **EP 1 202 539 A2**
(43) Date of publication of application: **02.05.2002**
(21) Application number: 01125415.8
(22) Date of filing: 31.10.2001
(51) Int. Cl.: H04M 1/725

(54) **Display controller for radio communication terminal**

(30) Priority: 31.10.2000 JP 2000333068
(71) Applicant: Kabushiki Kaisha Toshiba, Tokyo 105-8001 (JP)
(72) Inventor: Ohura, Seiji, Intellectual Property Division, Minato-ku, Tokyo 105-8001 (JP)
(74) Representative: HOFFMANN - EITLE

(57) **Abstract**

A display controller for a communication terminal is connected to a base station through a radio channel for making radio communications with the base station. A first display control unit (403) displays a moving image on a display unit (404). A second display unit (403) has a first storage unit (403-2) for storing a plurality of color numbers, and a second storage unit (403-3) for storing color data in correspondence to each of the color numbers, and displays color data corresponding to a color number read from the first storage unit (403-2) on the display unit (404) as a graphics image. A determination unit (400) determines, when the moving image and the graphics image are displayed on the display unit (404), which of the moving image and the graphics image is preferentially displayed depending on whether or not the color number read from the first storage unit (403-2) is a predetermined number.

## Description

The present invention relates to a radio communication terminal, and more particularly to a display controller for a radio communication terminal which is connected to a base station through a radio channel to make radio communications with the base station.

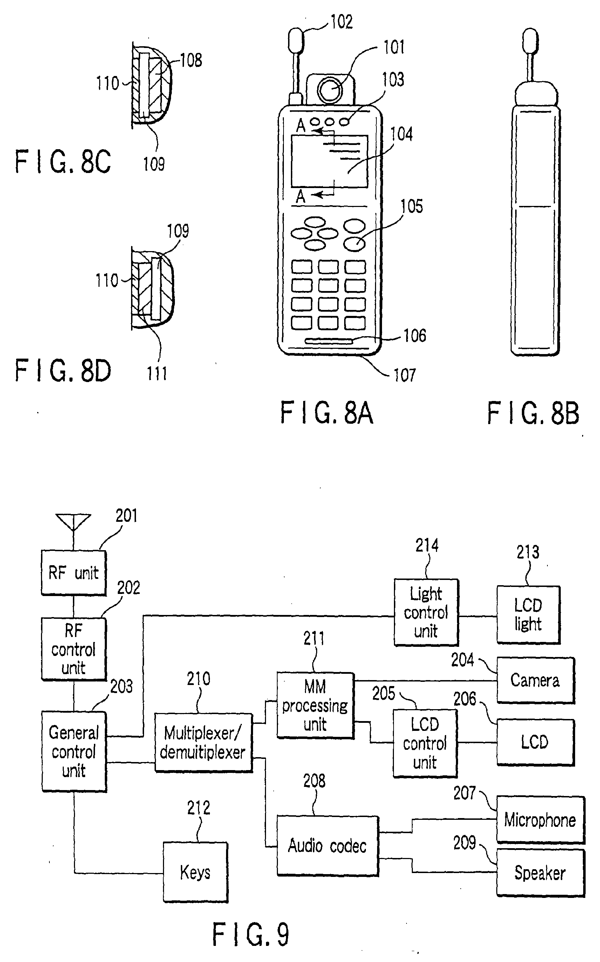

FIGS. 8A to 8D are diagrams illustrating outer appearances of a conventional portable radio communication terminal. FIG. 8A is a front view; FIG. 8B is a side view, FIG. 8C is a cross-sectional view of a back light in FIG. 8A taken along a line A-A; and FIG. 8D is a cross-sectional view of a front light in FIG. 8A taken along the line A-A.

A camera 101 is provided for photographing the face of a user, landscape, and the like. An antenna 102 has function of transmitting a transmission signal sent from a radio unit within a housing 107, and a function of receiving a signal sent from the outside and routing the signal to the inside of the housing 107. A speaker 103 transduces a received audio signal to a speech. A display 104 displays a manipulation made on the camera 101, an image captured by the camera 101, and an image received through the antenna 102.

A key manipulation unit 105 receives a telephone number entered by a user, and a menu selected by the user. The display 104 may be irradiated with light from the back side (back light), or with light from the front side (front light), when viewed in a cross-sectional view taken along a line A-A. A back light 108 is provided for the former irradiation method, while a front light 111 is provided for the latter irradiation method. The back light 108 and front light 111 are each provided with an LCD 109 and a protection cover 110.

The housing 107 also contains a video transmitter for transmitting an image captured by the camera 101 to a remote terminal, and a video receiver for receiving an image from a remote terminal.

FIG. 9 illustrates the configuration of a video transceiver as mentioned.

An RF unit 201 is provided for transmission and reception at a predetermined frequency. An RF control unit 202 acts to modulate a baseband signal and route the modulated signal to the RF unit 201, and conversely, to demodulate a signal sent from the RF unit 201 into a baseband signal. A general control unit 203 acts to control the overall video transceiver.

A camera 204 photographs a landscape and the like and outputs a video signal. Keys 212 permit a user to enter a telephone number, search a telephone book, and enter a simple mail or the like. An LCD control unit 205 controls an LCD 206. The LCD 206 displays an image output from the camera 204, and information represented by a telephone number, which is manipulated by the keys 212. The video transceiver also comprises a microphone 207, and an audio codec 208 for compressing an audio signal when it is to be transmitted and for decompressing an audio signal when it is received.

The video transceiver further comprises a speaker 209, and a multiplexer/demultiplexer 210 for multiplexing an audio signal, a video signal and data into a single signal and for demultiplexing a multiplexed signal into an audio signal, a video signal and data. An MM processing unit 211 compresses and decompresses a video signal in accordance with an appropriate scheme represented by H.263 and MPEG-4. An LCD light 213 is arranged to irradiate the LCD 206 from the back when it is a transmission type and to irradiate the LCD 206 from the front when it is a reflection type. A light control unit 214 turns ON/OFF the LCD light 213 in response to a light ON/OFF control signal sent from the general control unit 203.

In the following, description will be made on the operation of the video transceiver configured as described above. As the user manipulates the keys 212 for transmission or reception, a communication is started. Upon starting a communication, the MM processing unit 211 compresses a video signal sent from the camera 204, and sends the compressed video signal to the multiplexer/demultiplexer 210. An audio signal sent from the microphone 207 is compressed by the audio codec 208, and sent to the multiplexer/demultiplexer 210. Data for control is added to the video signal and audio signal sent to the multiplexer/demultiplexer 210, and these signals are multiplexed into a single signal. Then, the multiplexed signal is sent to the RF control unit 202 through the general control unit 203 for modulation, and the modulated signal is converted to radio waves by the RF unit 201 for transmission to a destination.

On the other hand, a received signal, passing through the RF unit 201, is demodulated to a digital signal by the RF control unit 202, and sent to the multiplexer/demultiplexer 210. The multiplexer/demultiplexer 210 demultiplexes the demodulated digital signal into a video signal, an audio signal and data for control. The video signal is sent to the MM processing unit 211, while the audio signal is sent to the audio codec 208. The video signal sent to the MM processing unit 211 is decompressed thereby, and sent to the LCD control unit 205 for display on the LCD 206.

The audio signal sent to the audio codec 208 in turn is decompressed thereby, and sent to the speaker 209 for generating a speech. In this event, as a key 212 is depressed, the general control unit 203 outputs a light ON signal to turn the LCD light 213 ON. After a predetermined time period has passed, the general control unit 203 outputs a light OFF signal to turn the LCD light 213 OFF.

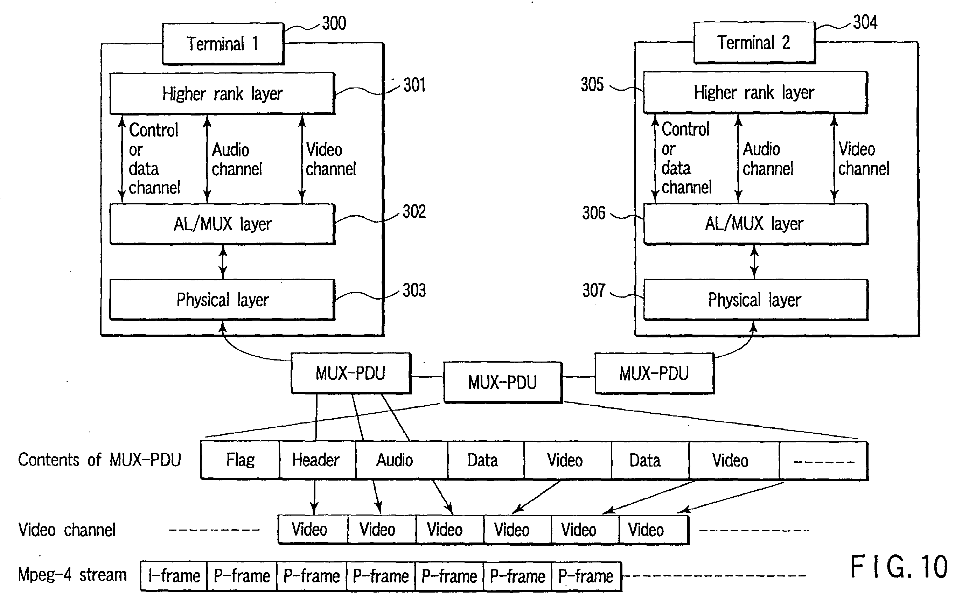

FIG. 10 is a diagram for explaining video and audio as well as the mechanism of data communication. The three types of data are multiplexed/demultiplexed (in accordance with H.233 or the like) in the multiplexer/demultiplexer 210 illustrated in FIG. 9. The data pass through the general control unit 203, RF control unit 202 and RF unit 201 for radio communication, so that two terminals are interconnected through a radio-based switched line communication network. A terminal 1 (300) and a terminal 2 (304) in FIG. 10 are interconnected on physical layers (specifically, radio switched network) 303, 307 for communication in units of packets called MUX-PDU. AL/MUX layers (specifically, the multiplexer/demultiplexer) 302, 306 exist above the physical layers 303, 307 for generating the foregoing MUX-PDU.

Higher rank layers 301, 305 exist above the AL/MUX layers 302, 306, and the two layers are interconnected through a video channel, an audio channel, and a control/data channel. The higher rank layers 301, 305 are comprised of the MM processing unit (video channel) 211 and the audio codec (audio channel) 208 in FIG. 9, and a data communication unit (communication/data channel) not shown in FIG. 9.

Video data sent from the MM processing unit 211 is multiplexed by the AL/MUX layers 302, 306, embedded in MUX-PDU, transmitted from the terminal 1 (300) to the terminal 2 (304) through the physical layers 303, 307, and sent to the higher rank layers 301, 305 through the reverse process for transmission and reception of video.

The MUX-PDU is comprised of a flag located at the head thereof for identifying the start of a frame; a header indicative of contents of MUX-PDU; and mixed data including audio, control and video data. The MUX-PDU is arranged in accordance with a table which has been initially defined by both terminals 300, 304. Video data are multiplexed and sent to a higher rank layer as a video channel which is embedded with an MPEG-4 stream. In the MPEG-4 stream, an I-frame (overall video) is followed by a P-frame (difference), and a reduced version of the I-frame, called the "macro-block," is periodically sent, such that one image can be sent every 133 frames.

While an image can be displayed by the configuration described above, no display controller has conventionally been provided for optimally and efficiently displaying a moving image and a graphics image on a display unit. No specific method has either been proposed for saving the power consumption of such a display controller.

The present invention has been made in view of the challenge as mentioned, and it is an object of the present invention to provide a display controller for a radio communication terminal which is capable of optimally and efficiently displaying a moving image and a graphics image on a display unit.

It is another object of the present invention to provide a display controller for a radio communication terminal which is capable of saving the power consumption of the display controller.

To achieve the above objects, in a first aspect, the present invention provides a display controller for a radio communication terminal connected to a base station through a radio channel for making radio communications with the base station. The display controller includes a first display control unit for displaying a moving image on a display unit, a second display control unit having a first storage unit for storing a plurality of color numbers and a second storage unit for storing color data in correspondence to each of the color numbers, for displaying color data corresponding to a color number read from the first storage unit on the display unit as a graphics image, and a determination unit operable when the moving image and the graphics image are displayed on the display unit for determining which of the moving image and the graphics image is preferentially displayed depending on whether or not the color number read from the first storage unit is a predetermined number.

In a second aspect, the display controller for a radio communication terminal of the first aspect further includes a multimedia processing unit for performing signal processing on the moving image, wherein the first display control unit supplies the multimedia processing unit with control signals including a timing clock and synchronization signals when moving image data is acquired from the multimedia processing unit.

Also, in a third aspect, in the display controller for a radio communication terminal of the second aspect, a parameter value associated with a timing at which the first display control unit acquires moving image data from the multimedia processing unit is programmable.

Further, in a fourth aspect, in the display controller for a radio communication terminal of the first aspect, control signals including a display clock and synchronization signals are supplied in addition to RGB color data when the moving image and the graphics image are displayed on the display unit.

Further, in a fifth aspect, in the display controller for a radio communication terminal of the fourth aspect, a parameter for use in displaying the moving image and the graphics image on the display unit is programmable.

In a sixth aspect, the present invention provides a display controller for a radio communication terminal connected to a base station through a radio channel for making radio communications with the base station. The display controller includes a first display control unit for displaying a moving image on a display unit, and a second display control unit having a storage unit for storing data having a predetermined number of bits indicative of each of RGB color data, for displaying color data read from the storage unit on the display unit as a graphics image.

Also, in a seventh aspect in the display controller for a radio communication terminal of the sixth aspect, the display controller determines which of the moving image and the graphics image is preferentially displayed depending on whether or not data representative of each color data is predetermined data.

Further, in an eighth aspect, in the display controller for a radio communication terminal of the sixth aspect, a display control bit is added to one arbitrary color data having a predetermined number of bits representative of a color, wherein the display controller determines which of the moving image and the graphics image is preferentially displayed in accordance with the state of the display control bit.

In a ninth aspect, the present invention provides a display controller for a radio communication terminal connected to a base station through a radio channel for making radio communications with the base station. The display controller includes a first display control unit for displaying a moving image on a display unit, a second display control unit for displaying a graphic image on the display unit, and a divider circuit for dividing a clock at an arbitrary frequency supplied from the outside for operating the display controller by an arbitrary division ratio to generate a clock frequency required for internal operations.

In a tenth aspect, the present invention provides a display controller for a radio communication terminal connected to a base station through a radio channel for making radio communications with the base station. The display controller includes a first display control unit for displaying a moving image on a display unit, a second display control unit for displaying a graphic image on the display unit, and a register unit having a first register for actually setting data therein, and a second register for storing addresses of the first register, and capable of programmably setting data therein, wherein an address of the first register is written into the second register, and data is subsequently written into the second register to transfer the data to the first register for setting the data.

In an eleventh aspect, in the display controller for a radio communication terminal of the tenth aspect, as an address of the first register is written into the second register, contents of the first register are transferred to the second register for reading data.

In a twelfth aspect, the present invention provides a display controller for a radio communication terminal connected to a base station through a radio channel for making radio communications with the base station. The display controller includes a first display control unit for displaying a moving image on a display unit, a second display control unit for displaying a graphics image on the display unit, and a control unit operable when the moving image or the graphics image is displayed on the display unit for reducing a display speed of the display unit when the graphics image is only displayed, as compared with displaying an image including the moving image.

In a thirteenth aspect, the present invention provides a display controller for a radio communication terminal connected to a base station through a radio channel for making radio communications with the base station. The display controller includes a first display control unit for displaying a moving image on a display unit, a second display control unit for displaying a graphics image on the display unit, a sleep mode setting unit capable of setting a sleep mode, and a control unit, responsive to recognition of the sleep mode set by the sleep mode setting unit, for stopping predetermined operations other than a sleep release recognition function after completing a sequence of operations which have been executed at the time of recognition.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram illustrating the configuration of an LCD control unit and components associated therewith according to one embodiment of the present invention;
FIGS. 2A to 2D are diagrams showing combinations of images displayed on an LCD 404;
FIG. 3 is a diagram for explaining how a moving image is displayed;
FIG. 4 is a diagram for explaining the relationship between synchronization signals and a moving image;
FIG. 5 is a diagram showing the flow of operation in displaying a graphics image when a lookup table method is used;
FIG. 6 is a diagram for explaining how an operation clock required by an LCD control unit 403 is set;
FIG. 7 is a diagram for explaining a register setting procedure;
FIGS. 8A to 8D are diagrams illustrating outer appearances of a conventional portable radio communication unit;
FIG. 9 is a block diagram illustrating the configuration of a video transceiver; and
FIG. 10 is a diagram for explaining video and audio as well as the mechanism of data communication.

In the following, one embodiment of the present invention will be described in detail with reference to the accompanying drawings. In a radio communication terminal for transmitting/receiving video data according to this embodiment, a video signal received from the MM processing unit 211 and a video signal from the camera 204 in FIG. 9 are sent to the LCD control unit 205 in the form of YUV video signal. The LCD control unit 205 converts these video signals to RGB signals for display on the LCD 206.

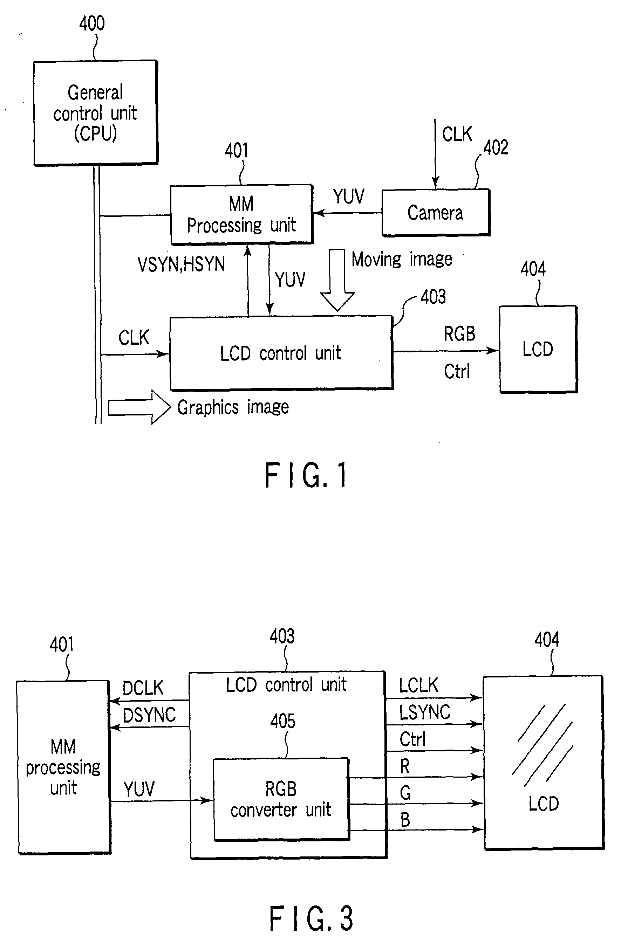

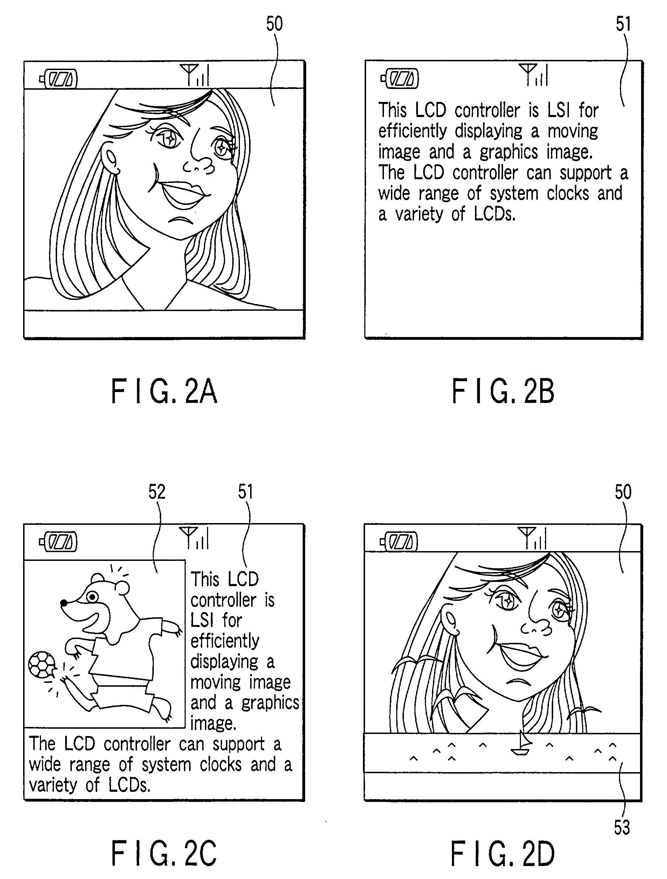

FIG. 1 is a block diagram illustrating the configuration of an LCD control unit and components associated therewith according to this embodiment of the present invention. Also, FIGS. 2A, 2B, 2C and 2D show possible combinations of images displayed on an LCD 404. FIG. 2A shows a displayed moving image 50 which may be sent from a remote terminal or shot by an associated camera. Similarly, FIG. 2B shows characters 51 which are displayed through a CPU 400 that functions as a general control unit. FIG. 2C shows an animation 52 and characters 51 displayed in combination. While a combination of the moving image 50 and the animation 52 or the characters 51 is additionally contemplated, this may be regarded as a combination of the moving image 50 and a graphics image 53 as shown in FIG. 2D.

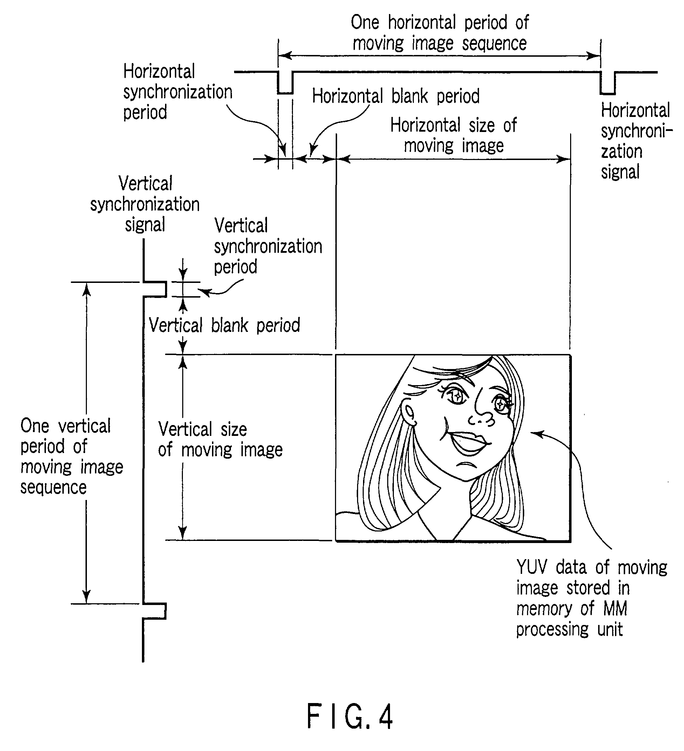

Next, description will be made on the operation of an LCD controller for displaying the combined images as mentioned. First, how to display a moving image will be explained with reference to FIG. 3.

An MM processing unit 401 outputs a YUV signal, which is a chroma signal of a moving image, to an LCD control unit 403 in this embodiment. The YUV signal is serially output in synchronism with DSYNC and DCLK applied from the LCD control unit 403 to the MM processing unit 401. Here, DSYNC includes a vertical synchronization signal and a horizontal synchronization signal for providing one image of a moving image, and DCLK is a timing clock for outputting a YUV serial signal.

FIG. 4 is a diagram for explaining the relationship between synchronization signals and a moving image. As described above, moving image YUV data is stored in a memory of the MM processing unit 401, and the LCD control unit 403 applies the MM processing unit 401 with the horizontal synchronization signal, vertical synchronization signal and timing clock for retrieving the YUV data. In response, the MM processing unit 401 enters one horizontal period of a moving image sequence for staring the delivery of YUV data of a moving image when a predetermined number of horizontal periods of the moving image sequence have passed, i.e., when a vertical blanking period has passed after it had received the vertical synchronization signal.

Similarly to the vertical period, horizontal moving image YUV data is sent after the horizontal synchronization signal period and the horizontal blank period in one horizontal period of the moving image sequence in which the MM processing unit 401 sends YUV data. In sequence, as a scan in the horizontal direction is completed for a vertical size of the moving image, a horizontal scanning period continues, in which no YUV data is sent, until entering the aforementioned horizontal period of the moving image sequence of the next frame, in which the MM processing unit 401 starts sending the YUV data. In the following, similar operations are repeated to send continuous moving image YUV data.

For the LCD control unit 403, the operation of sending data in the MM processing unit 401 corresponds to the operation of receiving the data. Therefore, the MM processing unit 401 and the LCD control unit 403 require that a variety of parameter values are identical, including the horizontal synchronization signal period; horizontal blanking period; horizontal size of the moving image; one horizontal period of the moving image sequence; vertical synchronization signal period; vertical blank period; vertical size of the moving image; and one vertical period of the moving image sequence. When these parameter values are fixed in the MM processing unit 401, the LCD control unit 403 also performs hardware and software operations in accordance with the parameter values. However, since this results in a combination of the MM processing unit 401 and the LCD control unit 403 fixed in one-to-one correspondence, these settings are made programmable in the LCD control unit 403 such that the values are written into registers of the LCD control unit 403 from a higher rank layer.

In this way, as illustrated in FIG. 3, the LCD control unit 403 serially receives a YUV signal from the MM processing unit 401, and converts the received YUV signal to an RGB signal by an RGB converter unit 403-1. Then, the LCD control unit 403 supplies the LCD 404 with the RGB signal, a display control signal (Ctrl), a display clock (LCLK), and a display synchronization signal (LSYNC).

Completely in a similar manner to retrieval of moving image data from the MM processing unit 401, a variety of parameter values inherent to the LCD 404 must have been determined when the LCD control unit 403 supplies the LCD 404 with RGB display data.

There are a horizontal synchronization signal period; vertical blank period; horizontal size of a panel; display system - horizontal period; vertical synchronization signal period; vertical blank period; vertical size of the panel; display system - vertical period, and the like, the values of which depend on the size and characteristics of the LCD 404. Therefore, these values are made arbitrarily settable in registers in the LCD control unit 403, so that a variety of LDC displays can be provided by writing data from the higher rank CPU.

Next, description will be made how to display a graphics image. Graphics image data is written from the CPU 400 into a frame memory (first storage unit) 403-2 in the LCD control unit 403 in a bit map form. The number of pixels in the frame memory 403-2 corresponds to at least the number of pixels on the LCD 404.

Next, description will be made on how data is written into the frame memory 403-2 and the data is displayed.

### 1. Lookup table method

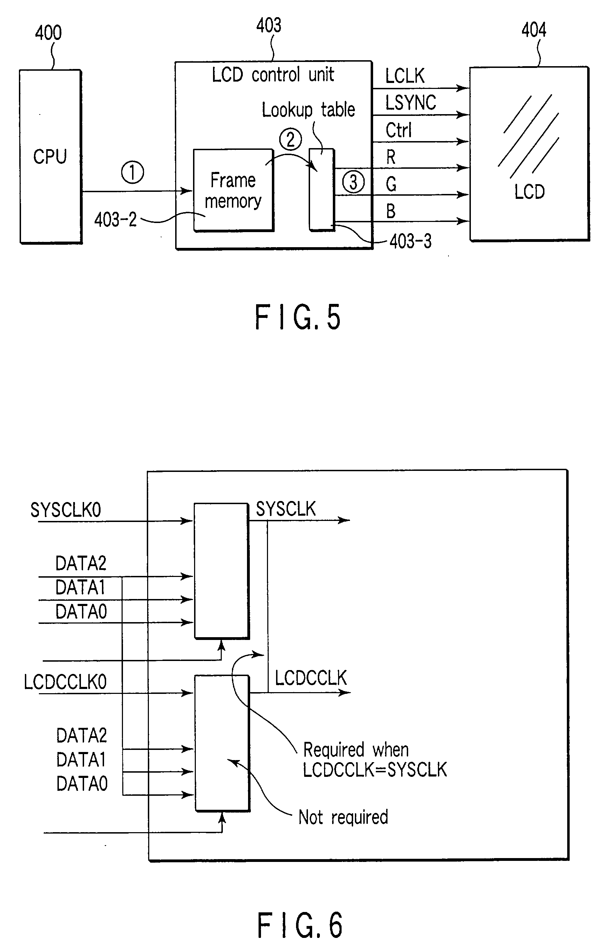

FIG. 5 shows the flow of operations when a lookup table method is employed. First, data is written from the CPU 400 into the frame memory 403-2 in the LCD control unit 403 (①). The data may be, for example, an 8-bit color number. Therefore, 256 different colors are available. A lookup table (second storage unit) 403-3 stores each RGB color data corresponding to the color number, so that for displaying, a color number is read from a certain bit in the frame memory 403-2 (②) to retrieve RGB color data corresponding to the read color number from the lookup table 403-3. Next, the resulting RGB color data is supplied to the LCD 404 together with other signals (③). In this event, assuming that RGB color data are each represented by six bits, 262144 possible combinations of colors are provided, where this embodiment features in selecting 256 colors from them.

### 2. Color data writing method

While the lookup table method involves writing a color number into the frame memory 403-2, the color data writing method directly writes color data into the frame memory 403-2. For example, assuming that each RGB color data has six bits, one pixel is represented by 19 bits which consist of 18-bit color data and one display control bit, later described, in the frame memory 403-2. For displaying, RGB color data may be directly retrieved sequentially from the frame memory 403-2 subsequent to an LSYNC signal, and output to the LCD 404.

Description will be next made on a simultaneous display of a moving image and a graphics image. As illustrated in FIG. 2D, a moving image and a graphics image may be simultaneously displayed on the LCD 404. For implementing this simultaneous display, in this embodiment, a selection is made as to which is preferentially displayed when determining moving image color data and graphics image color data to be displayed at an arbitrary pixel on the LCD 404.

The aforementioned lookup table method provides 256 color numbers, from which an arbitrary number is assigned to a color number with which a moving image is preferentially displayed. For example, assuming that color number 0 is assigned, when the color number 0 is written into the frame memory 403-2, moving image color data is output for that pixel. When no moving image is displayed, the function of color number 0 is lost, and it may be used as a normal color pallet.

Description will be next made on how color data is directly written into the frame memory 403-2. Likewise, in this case, discriminatory data, corresponding to color number 0 in the lookup table method, is required for discriminating from other color numbers. Here, the number of bits for one of RGB color data is increased by one bit which is added to the most significant bit side, such that the preference for displaying a moving image is identified by checking whether or not the additional bit is "1". For example, assuming that RGB color data each have four bits, R color data, which should essentially have four bits, is increased by one bit to have five bits. The color data is represented by the four least significant bits, with the fifth bit functioning as a display control bit or a moving image display preference bit. A moving image is preferentially displayed when this bit is "1" or "0". While the 4-bit color data is herein taken as an example, the number of bits of the color data is arbitrary.

Alternatively, instead of adding the display control bit for determining whether or not a moving image is preferentially displayed, a moving image may be preferentially displayed when RGB color data themselves are predetermined data.

Next, referring to FIG. 6, description will be made on how to set an operation clock required by the LCD control unit 403. A clock SYSCLK required by the LCD control unit 403 for its internal operation is supplied from the outside or generated by a built-in clock generator. Described herein is the clock supplied from the outside. The LCD control unit 403 also requires a clock LCDCCLK which is the basis of the timing at which moving image data is captured, and color data is sent to the LCD 404. SYSCLK and LCDCCLK at high frequencies are not preferable for saving the power consumption of the LCD control unit 403.

However, the LCD control unit 403 may not often be supplied with a clock at a desired frequency for reasons of the system. Thus, before the LCD controller 403 is powered to start the operation, an externally supplied clock SYSCLK0 is divided by an arbitrary division ratio. After the completion of setting, SYSCLK is generated from SYSCLK0 and supplied to respective circuits in the LCD control unit 403.

The same concept can be applied to LCDCCLK. Specifically, immediately after the LCD control unit 403 is powered, a division ratio is set for LCDCCLK0 supplied from the outside. Then, the LCD control unit 403 starts operating and can be provided with the required LCDCCLK. When LCDCCLK is set identical to SYSCLK, a circuit for generating LCDCCLK is not required, in which case the single clock SYSCLK may be connected to lines to circuits, which would otherwise require LCDCCLK, within the LCD control unit 403.

In the following, description will be made on a method of setting registers. As will be understood from the foregoing description, the LCD control unit 403 has a number of various parameter values to be stored. Data pertinent to the MM processing unit 401 such as the horizontal synchronization signal period, horizontal blank period, horizontal size of a moving image, one horizontal period of the moving image sequence, and so on, and data pertinent to the LCD 404 are written through registers. Also, an internal operation mode is set through a register, and graphics image data is also written through registers. These values, though some of them may be set by default, cannot be fixed, so that they must be able to be programmably set in registers, including those values which may be set by default. When there are such a large number of registers which should be set, this embodiment sets the registers in the following procedure.

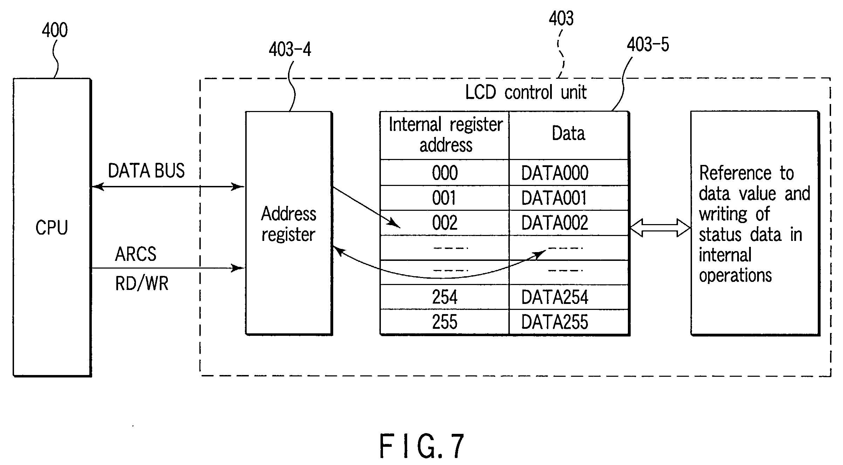

FIG. 7 is a diagram for explaining a register setting procedure. The LCD control unit 403 is provided with an address register 403-4 and an internal register 403-5. Data is actually set in the internal register 403-5 which does not allow an external CPU and the like to directly write data thereinto or read data therefrom. The CPU 400 reads and writes data from and into the internal register 403-5 by writing an address of the internal register 403-5 into the address register 403-4.

The address register 403-4 is assigned addresses of the internal register 403-5, and the CPU 400 writes an address of the internal register 403-5 into the address register 403-4 in a manner similar to a general data write with I/O. In this embodiment, the internal register 403-5 has addresses 000 - 255, which are represented by an 8-bit address signal, as an example. The addresses in the internal register 403-5, however, may be increased or decreased as required.

For writing data into a specified address in the internal register 403-5 after writing the address of the internal register 403-5, desired data is sequentially written into the address register 403-4, causing the data to be transferred to the specified address of the internal register 403-5. The data written into the internal register 403-5 in this way is referenced in an internal operation of the LCD control unit 403 as required.

On the other hand, for reading data from the internal register 403-5 in which the status indicative of a situation of internal operation has been written, or for referencing previously written data, an address of the internal register 403-5 is written into the address register 403-4, and subsequently, the address register 403-4 is read.

When data is either written into or read from the internal register 403-5, associated data in the internal register 403-5 is transferred to the address register 403-4 after an address of the internal register 403-5 is written into the address register 403-4 in order to minimize a time required for such operations. In this way, in reading data from the internal register 403-5, data to be read has already been set in the address register 403-4.

A location of the address register 403-4 into which an address of the internal register 403-5 is written may be identical to or different from a location of the address register 403-4 in which data read from the internal register 403-5 is stored.

Described next is an LCD display speed control. As previously described, images displayed on the LCD 404 include a moving image and a graphics image.
In comparison of display speed between a moving image and a graphics image, a higher speed is required for displaying the moving image. Since the LCD control unit 403 can recognize whether or not moving image data is being displayed on the LCD 404, the LCD control unit 403 increases the LCD display speed in this situation such that a natural moving image is displayed. On the other hand, when a graphics image is only displayed, the LCD control unit 403 reduces the LCD display speed in accordance with the characteristics of the LCD 404, and a flicker characteristic of the image to save the power consumption. This may be implemented by reducing the frequency of LCLK, previously described, and correspondingly reducing the period of LSYNC.

In addition, a sleep mode is provided for saving the power consumption of the LCD control unit 403 itself. A sleep mode setting bit is assigned to a certain register, such that as the bit indicates a transition to the sleep mode under the control of the CPU 400, the LCD control unit 403 entirely stops supplying the clock to circuits other than those associated with an interface with the CPU 400 for receiving a release from the sleep mode. By the time the sleep mode is entered from the time the sleep mode was set, image frame data which had existed at the time of setting should have been output to the LCD 404. For releasing the sleep mode, on the other hand, a release of the sleep mode can be accepted since a circuit which recognizes the release of the sleep mode is in a normal state even in the sleep mode. Upon receipt of the release of the sleep mode under the control of the CPU 400, the LCD control unit 403 resumes supplying the clock to those circuits to which no clock has been supplied in the sleep mode.

According to the present invention, a display controller for a radio communication terminal can be provided for optimally and efficiently displaying a moving image and a graphics image on a display unit.

Also, according to the present invention, a display controller for a radio communication terminal can be provided for saving the power consumption of the display controller.

## Claims

1. A display controller for a radio communication terminal connected to a base station through a radio channel for making radio communications with said base station, said display controller **characterized by** comprising:
a first display control unit (403) for displaying a moving image on a display unit (404);
a second display control unit (403) having a first storage unit (403-2) for storing a plurality of color numbers and a second storage unit (403-3) for storing color data in correspondence to each of the color numbers, for displaying color data corresponding to a color number read from said first storage unit (403-2) on said display unit (404) as a graphics image; and
a determination unit (400) operable when said moving image and said graphics image are displayed on said display unit (404) for determining which of said moving image and said graphics image is preferentially displayed depending on whether or not the color number read from said first storage unit (403-2) is a predetermined number.

2. A display controller for a radio communication terminal according to claim 1, **characterized by** further comprising a multimedia processing unit (401) for performing signal processing on said moving image, wherein said first display control unit (403) supplies said multimedia processing unit with control signals including a timing clock and synchronization signals when moving image data is acquired from said multimedia processing unit (401).

3. A display controller for a radio communication terminal according to claim 2, **characterized in that** a parameter value associated with a timing at which said first display control unit (403) acquires moving image data from said multimedia processing unit (401) is programmable.

4. A display controller for a radio communication terminal according to claim 1, **characterized in that** control signals including a display clock and synchronization signals are supplied in addition to RGB color data when said moving image and said graphics image are displayed on said display unit (404).

5. A display controller for a radio communication terminal according to claim 4, **characterized in that** a parameter for use in displaying said moving image and said graphics image on said display unit (404) is programmable.

6. A display controller for a radio communication terminal connected to a base station through a radio channel for making radio communications with said base station, said display controller **characterized by** comprising:
a first display control unit (403) for displaying a moving image on a display unit; and
a second display control unit (403) having a storage unit (403-2) for storing data having a predetermined number of bits indicative of each of RGB color data, for displaying color data read from said storage unit (403-2) on said display unit (404) as a graphics image.

7. A display controller for a radio communication terminal according to claim 6, **characterized in that** said display controller determines which of said moving image and said graphics image is preferentially displayed depending on whether or not data representative of said each color data is predetermined data.

8. A display controller for a radio communication terminal according to claim 6, **characterized in that** a display control bit is added to one arbitrary color data having a predetermined number of bits representative of a color, wherein said display controller determines which of said moving image and said graphics image is preferentially displayed in accordance with the state of said display control bit.

9. A display controller for a radio communication terminal connected to a base station through a radio channel for making radio communications with said base station, said display controller **characterized by** comprising:
a first display control unit (403) for displaying a moving image on a display unit (404);
a second display control unit (403) for displaying a graphic image on said display unit (404); and
a divider circuit for dividing a clock at an arbitrary frequency supplied from the outside for operating said display controller by an arbitrary division ratio to generate a clock frequency required for internal operations.

10. A display controller for a radio communication terminal connected to a base station through a radio channel for making radio communications with said base station, said display controller **characterized by** comprising:
a first display control unit (403) for displaying a moving image on a display unit (404);
a second display control unit (403) for displaying a graphic image on said display unit (404); and
a register unit having a first register (403-4) for actually setting data therein, and a second register (403-5) for storing addresses of said first register (403-4), said register unit capable of programmably setting data therein,
wherein an address of said first register (403-4) is written into said second register (403-5), and data is subsequently written into said second register (403-5) to transfer said data to said first register (403-4) for setting said data.

11. A display controller for a radio communication terminal according to claim 10, **characterized in that** as an address of said first register (403-4) is written into said second register (403-5), contents of said first register (403-4) are transferred to said second register (403-5) for reading data.

12. A display controller for a radio communication terminal connected to a base station through a radio channel for making radio communications with said base station, said display controller **characterized by** comprising:
a first display control unit (403) for displaying a moving image on a display unit (404);
a second display control unit (403) for displaying a graphics image on said display unit (404); and
a control unit (400) operable when said moving image or said graphics image is displayed on said display unit (404) for reducing a display speed of said display unit (404) when said graphics image is only displayed, as compared with displaying an image including said moving image.

13. A display controller for a radio communication terminal connected to a base station through a radio channel for making radio communications with said base station, said display controller **characterized by** comprising:
a first display control unit (403) for displaying a moving image on a display unit (404);
a second display control unit (403) for displaying a graphics image on said display unit (404);
a sleep mode setting unit capable of setting a sleep mode; and
a control unit (400), responsive to recognition of said sleep mode set by said sleep mode setting unit, for stopping predetermined operations other than a sleep release recognition function after completing a sequence of operations which have been executed at the time of recognition.
